# FASCICULE DE BREVET EUROPEEN

(11) **EP 1 369 383 B1**
(45) Date de publication et mention de la délivrance du brevet: **14.06.2006**
(21) Numéro de dépôt: 03291217.2
(22) Date de dépôt: 22.05.2003
(51) Int. Cl.: C01B 17/04, B01D 53/86, B01J 23/70, B01J 23/78, B01J 35/00

(54) **Procédé d'élimination du soufre d'une charge contenant de l'hydrogène sulfuré et du benzène, toluène et/ou xylènes**
Verfahren zur Entfernung von Schwefel aus einem Schwefelwasserstoff und Benzol, Toluol und/oder Xylole enthaltender Einsatz
Process for the removal of sulfur from a feed containing hydrogen sulfide and benzene, toluene and/or xylenes

(30) Priorité: 03.06.2002 FR 0206772
(43) Date de publication de la demande: 10.12.2003
(73) Titulaire: Institut Français du Pétrole, 92852 Rueil-Malmaison Cedex (FR)
(72) Inventeur: Nedez, Christophe, 30340 Salindres (FR); Chapat, Jean-François, 30340 Salindres (FR); Ray, Jean-Louis, 92200 Neuilly sur Seine (FR)

(56) Documents cités:
- EP-A- 0 115 449
- EP-A- 0 242 920
- EP-A- 0 311 515
- EP-A- 0 692 306
- FR-A- 2 538 716
- GB-A- 2 087 373
- US-A- 4 605 546
- US-A- 6 080 379

## Description

L'invention concerne un procédé d'élimination du soufre d'une charge contenant de l'hydrogène sulfuré et des traces minimes de benzène, toluène et/ou de xylènes (BTX).
Elle s'applique en particulier aux charges contenant par exemple jusqu'à 50 000 ppm (volume) de BTX et de préférence entre 50 et 5000 ppm.

Le gaz naturel, des gaz de raffinerie, des gaz issus de la transformation du charbon, etc. peuvent contenir de l'H₂S en des quantités variables. Pour raison environnementale et de sécurité, il est souvent nécessaire de transformer l'H₂S en un composé inerte et, qui plus est, valorisable, par exemple du soufre élémentaire.
Un procédé standard utilisé industriellement est le procédé Claus. Après séparation par une absorption conduite avec des amines, un traitement thermique est conduit sur le gaz dit acide obtenu, en présence d'un appoint d'air, à une température en général comprise entre 900 et 1300°C. La réaction (1) est menée à bien de telle manière à viser, en sortie de ce traitement, un ratio molaire de 2 entre H₂S et SO₂.

H₂S + 3/2 O₂ → H₂O + SO₂ (1)

Dans le même temps, environ 70% des composés soufrés sont transformés en soufre élémentaire Sₓ. La présence, dans les gaz à traiter, d'hydrocarbures et de CO₂ pourra générer la formation de sous-produits tels que COS et CS₂.
Au cours d'une deuxième étape, catalytique celle-ci, il s'agira de continuer la transformation en soufre de l'ensemble des composés soufrés présents, selon la réaction dite Claus (2) comme des réactions d'hydrolyse (3) et (4), au sein de réacteurs placés en cascade, au nombre en général de 2 ou de 3.

2 H₂S + SO₂ → 3/x Sₓ + 2 H₂O (2)

CS₂ + 2 H₂O → CO₂ + 2 H₂S (3)

COS + H₂O → CO₂ + H₂S (4)

Un moindre rejet d'effluents toxiques sera ainsi directement lié à la mise en oeuvre de catalyseur(s) efficace(s) de conversion de l'H₂S, du COS et du CS₂.
La présence d'hydrocarbures est parfois rencontrée directement dans des réacteurs Claus. Elle peut par exemple provenir d'une dérivation partielle de gaz acide en direction de l'entrée, par exemple du premier réacteur catalytique Claus (R₁), sans donc passage par le four : ce schéma est couramment rencontré pour mener correctement le traitement de gaz acides pauvres en H₂S. Les hydrocarbures présents alors en R₁ résultent d'un mélange mais sont en particulier souvent trouvés : du benzène, du toluène, des xylènes (d'où l'acronyme BTX).

L'homme de métier connaît bien cette situation et en particulier ses conséquences dommageables sur la performance et la durée de vie des catalyseurs Claus utilisés. A titre d'illustration, dans des cas industriels pratiques, il a déjà été vu que cette durée de vie pouvait alors se trouver divisée par plus de dix, par rapport à un traitement comparable à conduire en absence de BTX. La désactivation sus signalée est causée par une réaction parasite, à la surface du catalyseur utilisé, donnant lieu à la génération de ce que l'homme de métier appelle des "carsuls". Lesdits carsuls sont souvent constitués de composés aromatiques et/ou polyaromatiques contenant un ou plusieurs atomes de soufre.

L'objet de la présente invention concerne au moins un catalyseur, en particulier pour traiter des gaz contenant H₂S et en l'application de ce catalyseur ou d'une combinaison optimisée de catalyseurs permettant de résister très efficacement à un vieillissement accéléré causé par la présence d'hydrocarbures tels que des BTX. La performance globale du procédé de récupération du soufre sera alors améliorée par rapport à celle connue jusqu'ici.

Plus précisément l'invention concerne un procédé d'élimination au moins en partie du soufre d'une charge contenant de l'hydrogène sulfuré, de l'anhydride sulfureux, de l'oxysulfure de carbone et/ou du sulfure de carbone et une quantité minime de benzène, de toluène et/ou de xylènes dans au moins une zone réactionnelle contenant un catalyseur, et on récupère du soufre élémentaire et un effluent au moins en partie débarrassé du soufre, le procédé étant caractérisé en ce qu'on utilise comme catalyseur au moins un catalyseur contenant un support comprenant au moins un composé choisi dans le groupe formé par l'alumine, l'oxyde de titane et la zircone, le support comprenant en outre au moins un élément dopant choisi dans le groupe formé par le fer, le cobalt, le nickel, le cuivre et le vanadium, la zone réactionnelle comprenant au moins un lit contenant ledit catalyseur disposé en amont d'une autre masse catalytique en tant que couche protectrice de la masse catalytique, le volume du lit représentant de 1 à 70% du volume de la zone réactionnelle et la masse catalytique étant de l'oxyde de titane comprenant un sel de calcium, la masse étant disposée dans la partie aval.

Les formulations revendiquées dans cette application particulière correspondent à un support alumine, oxyde de titane ou zircone modifié par un ou plusieurs éléments dopants. Le dopage sera apporté par au moins un élément compris dans la liste suivante : Fe, Co, Ni, Cu, V. La teneur massique totale en élément(s) dopant(s) sera incluse entre 0,1 et 60%, de préférence comprise entre 0,5 et 40%, encore préférentiellement comprise entre 0,5 et 20%, voire encore entre 1 et 10% par rapport au catalyseur total. Le fer est l'élément dopant préféré de l'invention. Le support pourra aussi être constitué d'une combinaison d'alumine, d'oxyde de titane et/ou de zircone.
Selon un mode particulier de l'invention, l'élément dopant pourra être accompagné d'un ou de plusieurs co-dopants. Le co-dopant sera un métal alcalin, un métal alcalino-terreux ou une terre rare, ou une combinaison de plusieurs de ces constituants. Dans ce cas particulier de l'invention, la teneur massique totale en co-dopants sera incluse entre 0,5 et 40%, avantageusement comprise entre 1 et 30, et de préférence entre 1 et 15% par rapport au catalyseur total. Le co-dopant le plus couramment utilisé peut être le calcium, sous forme sulfate.
La terre rare est choisie dans le groupe formé par le lanthane, le cérium, le praséodyme, le néodyme, le prométhéum, le samarium, l'europium, le gadolinium, le terbium, le dysprosium, l'holmium, l'erbium, le thulium, l'ytterbium, l'yttrium et le lutécium. De préférence, on peut utiliser le lanthane et le cérium.

Le catalyseur pourra se présenter sous toute forme connue : poudre, bille, extrudé, monolithe, concassé par exemple. Deux formes préférées de l'invention sont l'extrudé, qu'il soit cylindrique ou polylobé, et la bille.
Dans le cas d'une mise en forme par malaxage suivi d'une extrusion, la section transversale de l'extrudé sera avantageusement comprise entre 0,5 et 8 mm, de préférence incluse entre 0,8 et 5 mm.

En ce qui concerne l'alumine, la poudre d'alumine utilisée comme matière première pour préparer la composition selon l'invention peut être obtenue par des procédés classiques tels que le procédé par précipitation ou gel, et le procédé par déshydratation rapide d'un hydrate d'alumine tel que l'hydrargillite.
Dans le cas d'une utilisation de billes d'alumine, elles peuvent être issues d'une mise en forme par coagulation en gouttes d'une suspension ou d'une dispersion aqueuse d'alumine ou d'une solution d'un sel basique d'aluminium se présentant sous forme d'une émulsion constituée d'une phase organique, d'une phase aqueuse et d'un agent de surface ou d'un émulsionnant.

L'alumine en billes pourra aussi être obtenue par agglomération d'une poudre d'alumine par technologie tournante telle que, par exemple, un drageoir tournant ou un tambour tournant. On pourra alors obtenir des billes de dimensions et de répartitions poreuses contrôlées, le tout étant en général généré pendant l'étape d'agglomération.
Les extrudés d'alumine pourront être obtenus par malaxage puis extrusion d'une matière à base d'alumine, ladite matière pouvant être issue de la déshydratation rapide d'hydrargillite et/ou la précipitation d'un ou de plusieurs gels d'alumine. L'alumine peut également être mise sous la forme de pastilles.
Suite à sa mise en forme, l'alumine peut être soumise à différentes opérations afin d'améliorer ses propriétés mécaniques, telles qu'un mûrissement par maintien dans une atmosphère à taux d'humidité contrôlée suivi d'une calcination puis, éventuellement, d'une imprégnation de l'alumine par une solution d'un ou plusieurs acides minéraux et/ou organiques, et un traitement hydrothermal en atmosphère confinée. En général, après les traitements subis, l'alumine est séchée et calcinée.
Dans le cas d'une mise en forme par malaxage suivi d'une extrusion, la section transversale de l'extrudé sera avantageusement comprise entre 0,5 et 5 mm, de préférence incluse entre 0,7 et 3 mm. Dans le cas d'une obtention de billes, le diamètre des billes sera en général compris entre 0,8 et 15 mm, avantageusement compris entre 1 et 8 mm, et de manière préférée inclus entre 2 et 7 mm.

Le dépôt des éléments dopants voire co-dopants pourra être réalisé par toute méthode connue de l'homme de métier.
Il pourra par exemple être réalisé par imprégnation du support déjà préparé avec les éléments à ajouter ou des précurseurs de ces éléments (nitrates, sulfates, ou carbonates par exemple), ou par mélange des éléments ou des précurseurs de ces éléments avec le support au cours ou en aval de la mise en forme de ce dernier. Le dépôt des éléments dopants voire co-dopants dans le support peut être également réalisé par co-précipitation.
Dans le cas d'un dépôt par imprégnation, celui-ci se fera de manière connue par mise en contact du support avec une ou plusieurs solutions, un ou plusieurs sols et/ou un ou plusieurs gels comprenant au moins un élément sous forme d'oxyde ou de sel ou d'un de leurs précurseurs. L'opération est en général conduite par trempage du support dans un volume déterminé de solution d'au moins un précurseur d'au moins un élément dopant voire co-dopant. Selon un mode préféré, l'apport des éléments dopants voire co-dopants est réalisé par dépôt par imprégnation à sec. Selon un mode alternatif, il pourra être réalisé par imprégnation par excès, ledit excès de solution étant ensuite évacué par égouttage.
Les composés déposés sur le support peuvent être choisis parmi les composés organiques, de préférence oxalates et formiates et/ou inorganiques. Ils sont préférentiellement choisis parmi les composés inorganiques (sulfates, nitrates, chlorures et oxychlorures par exemple).
La composition utilisée dans le procédé selon l'invention est obtenue en soumettant le support sur lequel est déposé le composé précité à une opération de séchage et de calcination. Le support, après le dépôt, peut être calciné à une température en général supérieure à 150°C, de préférence comprise entre 250 et 800°C. Généralement, la température de calcination, après le dépôt sur le support, ne dépasse par 1200°C.

Selon un mode préféré de l'invention, le catalyseur obtenu présentera une surface spécifique supérieure à 10 m²/g, avantageusement excédant 30 m²/g, par exemple 50-400 m²/g.

Le catalyseur pourra être disposé dans un ou plusieurs réacteurs Claus, en remplissant seulement une partie d'entre eux. Il sera situé au sommet du réacteur, sachant que l'alimentation, en gaz à traiter, d'un réacteur Claus se fait traditionnellement de haut en bas.
Plus précisément, le réacteur comprend au moins un lit contenant ledit catalyseur disposé en amont d'une autre masse catalytique appelée A en tant que couche protectrice de ladite masse catalytique, le volume du lit représentant de 1 à 70 % du volume du réacteur.
Le support utilisé comme masse catalytique est de l'oxyde de titane, et il comprend au moins un sel de calcium, et avantageusement un sulfate de calcium.

Selon une variante, le réacteur peut comprendre au moins deux lits de catalyseur, en série, de composition différente et chacun d'eux occupant comme couche protectrice de la masse A un volume de la zone réactionnelle égal ou différent.

Selon une caractéristique de l'invention, le volume de catalyseur représentera entre 1 et 70% de l'ensemble des volumes des catalyseurs et masse catalytique A placés dans les réacteurs, avantageusement entre 5 et 60%, et de manière préférée entre 10 et 50%. L'objectif alors sera de servir de couche de protection aux masses catalytiques A placés en aval. Notons que le catalyseur présentera, en avantage complémentaire, également une performance dans la conduite des réactions (2), (3) et (4).

Selon un mode de mise en oeuvre, la zone réactionnelle peut comprendre en série une alternance d' un lit de catalyseur et d'un lit de masse catalytique A.

Selon un autre mode préféré de mise en oeuvre, la zone réactionnelle peut comprendre en série deux réacteurs, chacun d'eux contenant un lit de catalyseur suivi d'un lit de masse catalytique A, une zone de condensation de soufre étant éventuellement interposée entre les deux réacteurs.

En condensant le soufre et en le récupérant, on évite des vapeurs de soufre dans le second réacteur qui ne manqueraient pas de perturber l'équilibre de la réaction de Claus.

Les conditions opératoires du procédé sont généralement les suivantes :
VVH (h⁻¹) = 100 à 3000, de préférence 500 à 1500
T° = 200-380°C, de préférence 250-300°C
P = 0,02 à 0,2 MPa en relatif, de préférence 0,05 à 0,1 MPa.

L'invention est illustrée par les exemples suivants :

### EXEMPLES

Le CR-3S est le nom commercial d'une alumine Claus commercialisée par Axens. Elle se présente sous la forme de billes de diamètre inclus entre 3,15 et 6,3 mm.
La masse catalytique A est préparée de la manière suivante :
A une suspension d'oxyde de titane obtenue par hydrolyse et filtration dans le procédé classique d'attaque sulfurique de l'ilménite, une suspension de chaux est ajoutée afin de neutraliser l'ensemble des sulfates présents. Ceci fait, la suspension est séchée à 150°C durant une heure. La poudre est alors malaxée en présence d'eau et d'acide nitrique. La pâte générée est extrudée au travers d'une filière pour obtenir des extrudés ayant une forme cylindrique. Après séchage à 120°C et calcination à 450°C, les extrudés présentent un diamètre de 3,5 mm, une surface spécifique de 116 m²/g pour un volume poreux total de 36 ml/100g. Le taux de TiO₂ est de 88% pour une teneur en CaSO₄ de 11%, la perte au feu complétant le bilan à 100%. La masse catalytique sera dénommée **A**. Sa teneur massique en Ca (exprimé en Ca) est de 3%.

Le catalyseur **B** résulte d'une imprégnation à sec d'une solution acide aqueuse de sulfate de fer sur **A**, suivie d'un séchage à 120°C et d'une calcination à 350°C. **B** affiche alors un taux massique de fer (exprimé en Fe) de 2%. B contient donc du fer et du calcium.
Le catalyseur **C** résulte d'une imprégnation à sec d'une solution acide aqueuse de sulfate de fer sur du CR-3S, suivie d'un séchage à 120°C et d'une calcination à 350°C. **C** affiche alors un taux massique de fer (exprimé en Fe) de 4%.
Le catalyseur **D** résulte d'une imprégnation à sec d'une solution aqueuse de nitrate de nickel sur du CR-3S, suivie d'un séchage à 120°C et d'une calcination à 350°C. **D** affiche alors un taux massique de nickel (exprimé en Ni) de 4%.
Le catalyseur **E** résulte d'une imprégnation à sec d'une solution aqueuse de nitrate de cuivre sur du CR-3S, suivie d'un séchage à 120°C et d'une calcination à 350°C. **E** affiche alors un taux massique de cuivre (exprimé en Cu) de 6%.
**B**, **C**, **D** et **E** répondent aux impératifs selon l'invention.
Les catalyseurs ou combinaisons de catalyseurs sont testés, durant 100 heures, dans des conditions de premier réacteur (R₁) Claus, avec une charge contenant en volume : 4,9% H₂S, 3,1% SO₂, 0,83% COS, 0,59% CS₂, 21,6% CO₂, 2,3% CO, 1,3% H₂, 22,8% H₂O, 200 ppm O₂, N₂ (qsp). Certaines expériences sont conduites telles quelles, d'autres en présence permanente, en plus, de 2000 ppm volume de toluène. La vitesse spatiale VVH est, dans tous les cas, de 1300 h⁻¹, la pression est voisine de la pression atmosphérique, la température est maintenue à 270°C. La réaction cruciale, car la plus difficile à mener à bien, est la réaction d'hydrolyse du CS₂ (3) dans le réacteur R₁ : elle nous servira dès lors ici comme réaction de référence.
Les résultats engrangés sont résumés au sein du Tableau I où sont données les proportions (%) en volume du réacteur occupé par les divers catalyseurs en tant que couche protectrice puis les proportions en volume du réacteur occupé par la masse catalytique.
En absence de BTX, un réacteur empli de 100% de masse catalytique A affichera les meilleures performances, en récupération du soufre. Par contre, dans des conditions de possible formation de carsuls (donc ici en présence de toluène), A est la moins bonne des solutions testées, du fait d'une désactivation rapide. A contrario, les agencements selon l'invention (application de **B**, **C**, **D** et **E** en couche de protection de **A**) fournissent des résultats nettement supérieurs, là où la protection de **A** par une alumine semble inefficace.
Le catalyseur B' renferme comme support de l'oxyde de titane pur résultant d'une hydrolyse d'alkoxyde de titane puis d'un malaxage suivi d'une extrusion, séchage à 120°C et calcination à 450°C.

**Tableau I.**

| Catalyseurs | Sans toluène | | toluène |
|---|---|---|---|
| | | 1% | 2000 ppm |
| 100% **A** | 82% | | 44% |
| 20% CR-3S puis 80% **A** | 74% | | |
| 40% **B** puis 60% **A** | | 65% | |
| 100% A | | 20% | |
| 100% B | | | 70% |
| 30% **C** puis 70% A | 74% | | 70% |
| 30% **D** puis 70% **A** | | | 64% |
| 25% **C** puis 75% **A** | | | 69% |
| 25% **E** puis 75% **A** | 74% | | 65% |
| 40% **B** puis 60% **A** | 77% | | 72% |
| 40% **B'** puis 60% **A** | | | 67% |
| 20% **B** puis 10% E puis 70% **A** | 77% | | 71% |

Autres exemples :
- Catalyseurs dopés au cobalt ou au vanadium :
   On a repris la préparation du catalyseur D, mais au lieu d'introduire du nitrate de nickel, on a introduit du nitrate de cobalt ou du nitrate de vanadium pour obtenir respectivement un catalyseur dopé au cobalt et un catalyseur dopé au vanadium. Ces deux catalyseurs donnent sensiblement le même résultat que le catalyseur D dopé au nickel, lorsqu'ils sont utilisés comme couche protectrice de la masse catalytique au titane A, cette couche protectrice occupant 30% du volume du réacteur.
- Influence du support zircone dans le catalyseur :
   De l'oxyde hydraté de zirconium est obtenu par traitement à la soude puis lavage à l'acide nitrique et à l'eau de sulfate basique de zirconium, dans les proportions suivantes : 75% de poudre, 10% d'acide nitrique et 15% d'eau. Ladite poudre est ensuite malaxée pendant une heure puis extrudée. Les extrudés sont alors séchés à 120°C pendant 2 heures puis calcinés à 450°C durant deux heures. Le catalyseur obtenu présente un diamètre de 3,5 mm, pour une surface spécifique de 91 m²/g et un volume poreux total de 34 ml/100g.
   Un catalyseur Fe/ZrO₂ est préparé par imprégnation à sec d'une solution acide aqueuse de sulfate de fer sur la zircone préalablement synthétisée, suivie d'un séchage à 120°C et d'une calcination à 350°C. Le catalyseur affiche alors un taux massique de fer (exprimé en Fe) de 4%.
   La séquence : 30% du volume du réacteur contenant 4% Fe/ZrO₂ puis 70% du volume de réacteur contenant **A** conduira, dans les conditions expérimentales présentées, en présence de 2000 ppm de toluène, à une conversion de 76% de CS₂, après 100 heures de réaction.
- Influence de la zircone en tant que masse catalytique :
   De la zircone préalablement synthétisée avec ou sans sulfate de calcium est disposée en tant que masse catalytique dans le réacteur Claus selon la séquence suivante :
      30% du volume du réacteur contenant le catalyseur C (Al₂O₃ - 4% Fe) puis 70% du volume du réacteur contenant la masse catalytique au zircone, qui conduit à une conversion de 78% de CS₂ en présence de 2000 ppm de toluène, dans les mêmes conditions expérimentales que celles des exemples précédents.

## Revendications

1. Procédé d'élimination du soufre d'une charge contenant de l'hydrogène sulfuré, de anhydride sulfureux, de l'oxysulfure de carbone et/ou du sulfure de carbone et une quantité minime de benzène, de toluène et/ou de xylènes dans au moins une zone réactionnelle contenant un catalyseur, et on récupère du soufre élémentaire et un effluent au moins en partie débarrassé du soufre, dans lequel on utilise comme catalyseur au moins un catalyseur contenant un support comprenant au moins un composé choisi dans le groupe formé par l'alumine, l'oxyde de titane et la zircone, le support comprenant en outre au moins un élément dopant choisi dans le groupe formé par le fer, le cobalt, le nickel, le cuivre et le vanadium,
dans lequel la zone réactionnelle comprend au moins un lit contenant ledit catalyseur disposé en amont d'une autre masse catalytique en tant que couche protectrice de ladite masse catalytique, le volume du lit représentant de 1 à 70 % du volume de la zone réactionnelle, et dans lequel la masse catalytique est de l'oxyde de titane comprenant un sel de calcium , la masse étant disposée dans la partie aval.

2. Procédé selon la revendication 1, dans lequel le support comprend en outre au moins un élément co-dopant choisi dans le groupe formé par un métal alcalin, un métal alcalino-terreux et une terre rare.

3. Procédé selon l'une des revendications 1 et 2, dans lequel l'élément dopant du support, seul ou en mélange, a une teneur en oxyde de métal exprimée en pourcent massique dudit métal comprise entre 0,1 et 60 % de la masse de catalyseur total.

4. Procédé selon l'une des revendications 1 à 3, dans lequel l'élément co-dopant, seul ou en mélange a une teneur massique représentant 0,5 à 40 % de la masse de catalyseur total.

5. Procédé selon l'une des revendications 1 à 4, dans lequel les conditions opératoires sont les suivantes :
| | |
|---|---|
| Température : | 200 - 380 °C, de préférence 250 - 300 °C |
| Pression : | 0,02 à 0,2 MPa en relatif, de préférence 0,05 à 0,1 MPa |
| VVH(h-1) : | 100 - 3000, de préférence 500 à 1500 |

6. Procédé selon l'une des revendications 1 à 5, dans lequel la zone réactionnelle comprend au moins deux lits de catalyseur, en série, de composition différente et chacun d'eux occupant un volume de la zone réactionnelle égal ou différent.

7. Procédé selon l'une des revendications 1 à 6 dans lequel le catalyseur est sous forme de poudre, de billes, d'extrudés, de monolithe ou du concassé, de préférence sous forme de billes ou d'extrudés.

8. Procédé selon l'une des revendications 6 et 7, dans lequel la zone réactionnelle comprend en série une alternance d' un lit de catalyser et d'un lit de masse catalytique A.

9. Procédé selon l'une des revendications 6 et 7, dans lequel la zone réactionnelle comprend en série deux réacteurs, chacun d'eux contenant un lit de catalyseur suivi d'un lit de masse catalytique A, une zone de condensation de soufre étant éventuellement interposée entre les deux réacteurs.

## Claims

1. A process for eliminating sulphur from a feed containing hydrogen sulphide, sulphur dioxide, carbon oxysulphide and/or carbon sulphide and a minimal quantity of benzene, toluene and/or xylenes in at least one reaction zone containing a catalyst, and recovering elemental sulphur and an effluent that is at least partially free of sulphur, wherein the catalyst used is at least one catalyst containing a support comprising at least one compound selected from the group formed by alumina, titanium oxide and zirconia, the support further comprising at least one doping element selected from the group formed by iron, cobalt, nickel, copper and vanadium, in which the reaction zone comprises at least one bed containing said catalyst disposed upstream of a further catalytic mass, acting as a protective layer for said catalytic mass, the volume of the bed representing 1% to 70% by volume of the reaction zone, and in which the catalytic mass is titanium oxide and comprises a calcium salt, said mass being disposed in the downstream portion.

2. A process according to claim 1, in which the support further comprises at least one co-doping element selected from the group formed by an alkali metal, an alkaline-earth metal and a rare earth.

3. A process according to claim 1 or claim 2, in which the doping element of the support, used alone or as a mixture, has a weight content, in the range 0.1 % to 60% of the total catalyst mass.

4. A process according to one of claims 1 to 3, in which the weight content of the co-doping element, used alone or as a mixture, represents 0.5% to 40% of the total catalyst mass.

5. A process according to one of claims 1 to 4, in which the operating conditions are as follows:
• temperature: 200-380°C, preferably 250-300°C;
• pressure: 0.02 to 0.2 MPa relative, preferably 0.05 to 0.1 MPa;
• HSV (h⁻¹): 100-3000, preferably 500 to 1500.

6. A process according to one of claims 1 to 5, in which the reaction zone comprises at least two catalyst beds, in series, with different compositions and each occupying a volume of the reaction zone that can be equal or different.

7. A process according to one of claims 1 to 6, in which the catalyst is in the form of a powder, beads, extrudates, a monolith or crushed material, preferably in the form of beads or extrudates.

8. A process according to one of claims 6 and 7, in which the reaction zone comprises an alternating series of a catalyst bed and a bed of catalytic mass A.

9. A process according to one of claims 6 and 7, in which the reaction zone comprises two reactors in series, each containing a bed of catalyst followed by a bed of catalytic mass A, a sulphur condensation zone optionally being interposed between the two reactors.

## Patentansprüche

1. Verfahren zur Entfernung von Schwefel aus einer Charge, die Schwefelwasserstoff, Schwefeldioxid, Kohlenoxidsulfid und/oder Schwefelkohlenstoff und eine geringe Menge an Benzol, Toluol und/oder Xylol in mindestens einer Reaktionszone enthält, welche einen Katalysator aufweist, wobei elementarer Schwefel und ein Abfluss, der mindestens teilweise von Schwefel befreit ist, wiedergewonnen wird, bei dem als Katalysator mindestens ein Katalysator verwendet wird, der einen Träger enthält, welcher mindestens eine Verbindung umfasst, die ausgewählt ist aus der Gruppe bestehend aus Aluminium, Titanoxid, und Zirkonium, wobei der Träger ferner mindestens ein dotierendes Element umfasst, welches ausgewählt ist aus der Gruppe bestehend aus Eisen, Kobalt, Nickel, Kupfer und Vanadium,
bei dem die Reaktionszone mindestens ein Bett umfasst, welches den Katalysator stromaufwärts von einer anderen katalytischen Masse als Schutzschicht der katalytischen Masse angeordnet enthält, wobei das Bettvolumen von 1 bis 70 % des Umfangs der Reaktionszone darstellt und bei dem die katalytische Masse aus Titanoxid, das ein Kalziumsalz umfasst, besteht, wobei die Masse im stromabwärtigen Teil angeordnet ist.

2. Verfahren nach Anspruch 1, bei dem der Träger ferner mindestens ein co-dotierendes Element umfasst, welches ausgewählt ist aus der Gruppe bestehend aus einem Alkalimetall, einem Erdalkalimetall und einer seltenen Erde.

3. Verfahren nach einem der Ansprüche 1 und 2, bei dem das dotierende Element des Trägers, allein oder im Gemisch, einen Gehalt an Metalloxid aufweist, der, in Prozent der Masse des Metalls ausgedrückt, zwischen 0,1 und 60 % der Masse des gesamten Katalysators umfasst.

4. Verfahren nach einem der Ansprüche 1 bis 3, bei dem das co-dotierende Element, allein oder im Gemisch, einen Massengehalt aufweist, welcher 0,5 bis 40 % der Masse des gesamten Katalysators darstellt.

5. Verfahren nach einem der Ansprüche 1 bis 4, bei dem die Betriebsbedingungen die folgenden sind:
| | |
|---|---|
| Temperatur: | 200-380 °C, vorzugsweise 250-300 °C |
| Druck: | 0,02 bis 0,2 Mpa relativ, vorzugsweise 0,05 bis 0,1 Mpa |
| VVH(h-1): | 100-3000, vorzugsweise 500 bis 1500 |

6. Verfahren nach einem der Ansprüche 1 bis 5, bei dem die Reaktionszone mindestens zwei Katalysatorbetten in Serie und von unterschiedlicher Zusammensetzung umfasst, und wobei jedes denselben oder einen unterschiedlichen Umfang der Reaktionszone einnimmt.

7. Verfahren nach einem der Ansprüche 1 bis 6, bei dem der Katalysator in Form eines Pulvers, von Kugeln, von Extrudaten, von Monolithen oder von Krümeln vorliegt, insbesondere in Form von Kugeln oder Extrudaten.

8. Verfahren nach einem der Ansprüche 6 und 7, bei dem die Reaktionszone in Serie abwechselnd ein Katalysatorbett und ein Bett mit katalytischer Masse A umfasst.

9. Verfahren nach einem der Ansprüche 6 und 7, bei dem die Reaktionszone in Serie zwei Reaktoren umfasst, wobei jeder ein Katalysatorbett gefolgt von einem Bett mit katalytischer Masse A enthält, wobei gegebenenfalls eine Schwefelkondensationszone zwischen die beiden Reaktoren geschaltet ist.
